# EUROPEAN PATENT APPLICATION

(11) **EP 4 596 725 A2**
(43) Date of publication of application: **06.08.2025**
(21) Application number: 25153102.6
(22) Date of filing: 21.01.2025
(51) Int. Cl.: C21D 1/613, C21D 1/62, C21D 9/00, C21D 9/28, C21D 9/32, C21D 9/40, C21D 1/767, C01B 3/00, F27D 9/00, F27D 15/02

(54) **QUENCHING APPARATUS**

(30) Priority: 02.02.2024 JP 2024014604
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: SIMANULLANG, Marolop, Yokosuka, 239-0847 (JP); NAKADAI, Yasuhiro, Yokosuka, 239-0847 (JP); NADOLSKI, Dawid, 47805 Krefeld (DE)
(74) Representative: Air Liquide

(57) **Abstract**

The problem addressed lies in providing a quenching apparatus and a quenching method with which gas quenching employing hydrogen gas can be efficiently performed.

The present invention discloses a quenching apparatus comprising: a quenching chamber for air blast cooling a material using hydrogen gas; a heat exchanger for cooling the hydrogen gas; a first pipe for supplying the heat exchanger with hydrogen gas discharged from the quenching chamber; and a second pipe for supplying the quenching chamber with hydrogen gas cooled by means of the heat exchanger.

## Description

### [Technical Field]

The present disclosure relates to an apparatus for quenching a material by using hydrogen gas as a coolant.

### [Background Art]

Quenching is an operation to cool a high-temperature material more rapidly than it would cool in still air. Quenching is performed in a process of producing ferrous materials (e.g., steel), and involves rapidly cooling a heated metal structure having an austenite structure in order to obtain a martensite structure having superior characteristics in terms of wear resistance, tensile strength and fatigue strength, etc. This operation is especially important for improving the characteristics of carburized ferrous materials, which are likely to have an austenite structure remaining on the surface.

Coolants used for quenching include oil, water, aqueous solutions (e.g., aqueous polymer solutions), and gases, etc.

Quenching using an oil as the coolant enables rapid cooling of the material because of the high heat transfer coefficient of the oil. Meanwhile, quenching using an oil as the coolant requires preheating of the oil to a suitable temperature in order to prevent the oil from boiling when the high-temperature material is initially treated, and additional equipment is required for that purpose. Furthermore, the oil adheres to the material, therefore necessitating a washing step and a step for disposing of the oil-containing washing liquid after the quenching.

Quenching using water or an aqueous solution (e.g., an aqueous polymer solution) as the coolant also enables rapid cooling of the material because of the high heat transfer coefficient of the water or the aqueous solution. Meanwhile, cracks forming in the material such as steel is often a problem with quenching using water as the coolant. Furthermore, quenching using water or an aqueous solution (e.g., an aqueous polymer solution) as the coolant necessitates a step for washing and removing the coolant adhering to the material, and a step for drying the material in order to prevent rust from forming, after the quenching.

Quenching using a gas as the coolant (gas quenching) is less useful for rapidly cooling the material than quenching using an oil as the coolant or quenching using water or an aqueous solution (e.g., an aqueous polymer solution) as the coolant, because gases generally have a lower heat transfer coefficient than oil, water and aqueous solutions, etc. Gas quenching nonetheless has some outstanding features, such as enabling fine adjustment of parameters such as temperature and pressure of the coolant, the lack of a need for post-treatment (e.g., washing and drying) of the material after quenching, a small environmental impact because of little waste material, the need for only a small amount of equipment, and ease of incorporation into a production line. In order to improve cooling efficiency, cooling of a material by means of gas quenching is normally carried out by means of air blast cooling using a fan, while employing a gas pressurized to a high pressure.

There is a need for an apparatus and a method for performing quenching efficiently. JP 2007-502913 A, for example, discloses an apparatus and a method enabling gas quenching to be efficiently performed by efficiently pressurizing a high-pressure gas comprising helium in particular.

### [Prior Art Documents]

### [Patent Documents]

[Patent Document 1] JP 2007-502913 A

### [Summary of the Invention]

### [Problems to be Solved by the Invention]

Conventional gas quenching mainly employs nitrogen gas, helium gas, argon gas, or a mixed gas comprising a combination thereof, or the like, as the coolant. Nonetheless, it is desirable to use a gas having a higher heat transfer coefficient in order to perform gas quenching more efficiently.

In this regard, the use of hydrogen gas as the coolant is thought to be preferable from the point of view of cooling efficiency, considering that the heat transfer coefficient of hydrogen gas is approximately double the heat transfer coefficient of nitrogen gas and approximately 1.3 times the heat transfer coefficient of helium gas. However, hydrogen gas is more expensive than nitrogen gas, etc. which is widely used because it is inexpensive, for example, so it is difficult to use hydrogen gas for quenching on an industrial scale in view of the cost. Hydrogen gas is also combustible and flammable and therefore requires handling precautions, unlike nitrogen gas, etc. which is an inert gas. It is especially difficult to use hydrogen gas pressurized to a high pressure on an industrial scale.

The problem addressed by the present disclosure therefore lies in providing a quenching apparatus and a quenching method with which gas quenching employing hydrogen gas having a high heat transfer coefficient can be efficiently performed.

### [Means for Solving the Problems]

The following quenching apparatus is used in the present disclosure.

A quenching apparatus comprising: a quenching chamber for air blast cooling
a material using hydrogen gas;
a fan portion for supplying the hydrogen gas to the quenching chamber;
a heat exchanger for cooling the hydrogen gas;
a first pipe for supplying hydrogen gas inside the quenching chamber to the heat exchanger; and
a second pipe for supplying the fan portion with hydrogen gas cooled by means of the heat exchanger.

The quenching apparatus according to the present disclosure makes it possible to efficiently perform quenching employing hydrogen gas which has a superior heat transfer coefficient.

### [Brief Description of the Drawings]

[Fig. 1] Fig. 1 shows an exemplary configuration of a gas quenching apparatus according to embodiment 1.
[Fig. 2] Fig. 2 shows an exemplary configuration of a gas quenching apparatus according to embodiment 2.
[Fig. 3] Fig. 3 shows an exemplary configuration of a gas quenching apparatus according to embodiment 3.
[Fig. 4] Fig. 4 shows a relationship between distance from a material surface and Vickers hardness of materials quenched using oil, hydrogen or nitrogen.

### [Embodiments of the Invention]

Exemplary embodiments of the present disclosure will be described in detail below. Embodiments may be implemented individually or embodiments may be implemented in combination. For the components illustrated in the drawings, some components may be omitted, components may be added, or some components may be changed to other components, to the extent that the effects of the present invention are still achieved. Particular descriptions of one embodiment that are applicable to other embodiments will not be repeated for such other embodiments.

The numerical ranges in the present disclosure include the upper and lower limits, respectively, that are indicated with "-" and "from". For example, the expression "A-B" or "from A to B" using numerical values A and B means A or more to B or less. The expressions "A-B", "from A to B", and "A or more to B or less" that are used to indicate the stepwise numerical ranges in the present disclosure also independently include both "preferably A or more" and "preferably B or less," where the lower and upper limits may be replaced with other numerical range upper and lower limits. The lower or upper limits of the numerical ranges given in the present disclosure are numerical values within the numerical range, and may be replaced with the numerical values given in the examples.

### <Embodiment 1>

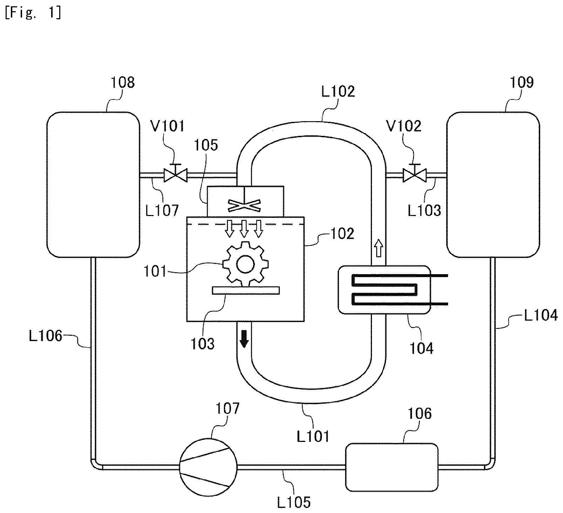

An exemplary configuration of a quenching apparatus according to an embodiment is illustrated in fig. 1.

The quenching apparatus illustrated in fig. 1 comprises: a quenching chamber 102 for air blast cooling a material 101 using hydrogen gas; a heat exchanger 104 for cooling the hydrogen gas; a first pipe (pipe L101) for supplying the heat exchanger 104 with hydrogen gas discharged from the quenching chamber 102; and a second pipe (pipe L102) for supplying the quenching chamber 102 with hydrogen gas cooled by means of the heat exchanger 104.

The hydrogen gas used for quenching in the quenching apparatus illustrated in fig. 1 is circulated through the apparatus and repeatedly used during quenching. The apparatus can therefore efficiently perform quenching employing hydrogen gas.

### (Quenching chamber)

The quenching chamber 102 is a space (preferably a sealed space) for quenching the material 101, and is provided with an openable/closable material inlet/outlet (not depicted), and a placement stand 103 on which the material 101 can be placed. The material 101 placed on the placement stand 103 is air blast cooled using hydrogen gas supplied from a fan portion 105 connected to the quenching chamber 102.

### (Material)

The material 101 may be any material provided that it can be quenched. The material may be a metal material or a glass material. The metal material is a ferrous material, for example, and the ferrous material is steel, for example. The ferrous material may be a carburized ferrous material, and the steel may be carburized steel.

The material 101 may be placed on the placement stand inside the quenching chamber 102 through the material inlet/outlet provided in the quenching chamber 102.

The material 101 has preferably been heated in a heating furnace before being supplied to the apparatus of the present disclosure. The material which has been heated in the heating furnace may be heated to 800-1000° C in the heating furnace, for example.

### (Hydrogen gas)

Hydrogen gas denotes a gas comprising H₂ as the main component. The hydrogen gas may be a gas comprising H₂ in an amount of 50 vol% or more, 60 vol% or more, 70 vol% or more, 80 vol% or more, 85 vol% or more, 90 vol% or more, 95 vol% or more, 98 vol% or more, 99 vol% or more, 99.9 vol% or more, or 100 vol% or more, with respect to the total volume of gas. The hydrogen gas may comprise inevitable impurities originating from the starting materials. Non-limiting examples of such impurities that may be cited include water, hydrocarbons, carbon monoxide, and carbon dioxide, etc. The impurities may be in the form of solids, liquids or gases. Furthermore, the hydrogen gas may be free or substantially free from inert gas. Examples of inert gases that may be cited include helium gas, neon gas, argon gas, nitrogen gas, carbon dioxide gas, or a mixed gas comprising any combination thereof.

The hydrogen gas may contain impurities, such as fine particles originating from the material, which contaminate the hydrogen gas when the material is quenched.

If the composition of the hydrogen gas changes inside the quenching apparatus, then the hydrogen gas may have the composition above at the point in time when the hydrogen gas is supplied into the quenching apparatus from the outside.

The hydrogen gas is supplied into the quenching apparatus from the outside through a supply port provided on a suitable part of the apparatus. Non-limiting examples of suitable parts of the apparatus for the supply port to be provided include: a high-pressure hydrogen gas tank 108, a low-pressure hydrogen gas tank 109, hydrogen gas tanks 207, 307, pipes L102, L203, L302, and quenching chambers 102, 202, 302. The supply port may be closed when the apparatus is not being supplied with the hydrogen gas.

### (Fan portion)

The fan portion 105 comprises: a supply port for supplying hydrogen gas to the fan portion 105 through the pipe L102, and a discharge port for discharging the hydrogen gas from the fan portion 105. The discharge port is connected to the quenching chamber 102 and supplies the quenching chamber 102 with hydrogen gas for air blast cooling the material 101.

The fan portion 105 supplies the hydrogen gas to the quenching chamber 102 at a suitable flow velocity for air blast cooling the material 101. Furthermore, the fan portion 105 creates a flow of hydrogen gas until the hydrogen gas supplied to the quenching chamber 102 is reintroduced into the fan portion 105 via the pipe L101, the heat exchanger 104, and the pipe L102.

### (Heat exchanger)

The heat exchanger 104 is supplied with hydrogen gas from the quenching chamber 102 through the pipe L101, and cools this hydrogen gas to quenching temperature, then discharges the cooled hydrogen gas through the pipe L102.

The quenching apparatus illustrated in fig. 1 further comprises: a branch pipe branching from the second pipe (pipe L102); a low-pressure hydrogen gas tank 109 for storing hydrogen gas supplied through the branch pipe; a hydrogen gas compressor 107 for pressurizing hydrogen gas supplied from the low-pressure hydrogen gas tank 109; a high-pressure hydrogen gas tank 108 for storing hydrogen gas pressurized by the hydrogen gas compressor 107; and a supply pipe for supplying the hydrogen gas inside the high-pressure hydrogen gas tank 108 to the second pipe.

By virtue of having these components, the quenching apparatus illustrated in fig. 1 can repressurize and store the hydrogen gas which was used for quenching, and then use this hydrogen gas for subsequent quenching.

### (Hydrogen gas compressor)

The hydrogen gas compressor 107 is capable of pressurizing the hydrogen gas preferably to 2-10 bar, and more preferably to 5-10 bar. The material can be cooled more rapidly by using pressurized hydrogen gas.

Any well-known hydrogen gas compressor may be used as the hydrogen gas compressor 107, to the extent that the effects of the present invention are still achieved. A piston compressor (including oil-free and highly-lubricated) may be cited as a non-limiting example of "any well-known hydrogen gas compressor" such as this. Furthermore, a hydrogen gas compressor employing a metal hydride (which will be described later) may be used as the hydrogen gas compressor.

In the quenching apparatus illustrated in fig. 1, the hydrogen gas in the pipe L102 passes through the branch pipe branching from the pipe L102, and is supplied to the low-pressure hydrogen gas tank 109, where the hydrogen gas is stored. The hydrogen gas inside the low-pressure hydrogen gas tank 109 passes through a pipe L104 and is supplied to the hydrogen gas regeneration unit 106 which removes impurities in the hydrogen gas. The hydrogen gas from which the impurities have been removed is supplied from the hydrogen gas regeneration unit 106 to the hydrogen gas compressor 107 through a pipe L105. The hydrogen gas which has been pressurized by means of the hydrogen gas compressor 107 passes through a pipe L106 and is supplied to the high-pressure hydrogen gas tank 108, where the pressurized hydrogen gas is stored.

A high-pressure gas, typically pressurized to 20-30 bar, was considered desirable for use in conventional gas quenching from the point of view of quenching efficiency. However, generating this kind of high-pressure gas requires the quenching apparatus to have a costly gas compressor (e.g., a piston compressor). Furthermore, it is not easy to meet the safety standards which are set in many countries for the use of high-pressure gas above 10 bar (e.g., quantitative restrictions on high-pressure gas, presence of equipment meeting the standards, constant attendance of qualified managers, etc.), so it is difficult to operate a gas quenching apparatus comprising a gas compressor which generates such high-pressure gas.

Meanwhile, the hydrogen gas used as a coolant in the quenching apparatus illustrated in fig. 1 has a high heat transfer coefficient and therefore enables quenching to be performed efficiently even if the pressure of the hydrogen gas is a relatively low pressure (e.g., 2-10 bar or 5-10 bar). The hydrogen gas compressor 107 in the quenching apparatus illustrated in fig. 1 may therefore be an inexpensive gas compressor which pressurizes the hydrogen gas to a relatively low pressure (e.g., 2-10 bar or 5-10 bar). The quenching apparatus illustrated in fig. 1 can therefore be operated more safely and also at a lower cost than a conventional apparatus.

### (Hydrogen gas compressor employing metal hydride)

Metal hydrides, which are also referred to as hydrogen storage alloys, are alloys having the property of releasing hydrogen at a high temperature and adsorbing hydrogen at a low temperature. A hydrogen compressor employing a metal hydride is a gas compressor which pressurizes hydrogen gas by using this property of the metal hydride.

A hydrogen compressor employing a metal hydride is capable of efficiently pressurizing the hydrogen gas to a desired pressure (e.g., preferably 2-10 bar, more preferably 5-10 bar) in the method and apparatus according to this example.

A hydrogen compressor employing a metal hydride can generally be introduced and operated at a lower cost than conventional compressors which have mainly been used for gas quenching, such as a piston compressor (including oil-free and highly-lubricated), and is also easy to incorporate into a production line.

Furthermore, although there are precautions for handling hydrogen gas because it is combustible and flammable, a hydrogen compressor employing a metal hydride is capable of pressurizing hydrogen gas more safely than a conventional compressor.

Furthermore, a hydrogen compressor employing a metal hydride specifically adsorbs and expels hydrogen by means of the metal hydride, and is therefore capable of improving and maintaining the purity of the hydrogen gas in the process of pressurizing the hydrogen gas.

Examples of metal hydrides which may be cited include iron-titanium-based, titanium-nickel-based, lanthanum-nickel-based, and magnesium-based alloys.

### (High-pressure hydrogen gas tank)

The high-pressure hydrogen gas tank 108 is capable of storing the hydrogen gas which has been pressurized by means of the hydrogen gas compressor 107 and supplied through the pipe L106. The hydrogen gas stored in the high-pressure hydrogen gas tank 108 passes through a supply pipe (pipe L107) comprising an opening/closing valve V101, and is supplied to the second pipe (pipe L102) as a result of the opening/closing valve V101 being released. The hydrogen gas supplied to the pipe L102 is supplied to the quenching chamber 102 via the fan portion 105.

The opening/closing valve V101 can be released when the pressure of the hydrogen gas inside the quenching chamber 102 has fallen below a desired pressure (preferably 2-10 bar, more preferably 5-10 bar), and the opening/closing valve V101 can furthermore be closed when the pressure of the hydrogen gas inside the quenching chamber 102 has risen to or above the desired pressure. The opening/closing valve V101 is thus capable of regulating the pressure of the hydrogen gas inside the quenching chamber 102 so that a desired pressure is maintained.

### (Low-pressure hydrogen gas tank)

The low-pressure hydrogen gas tank 109 stores the hydrogen gas which was used for gas quenching and supplied through a supply pipe (pipe L103). The hydrogen gas inside the low-pressure hydrogen gas tank 109 is supplied to the hydrogen gas compressor 107 through the pipe L104 and the pipe L105 between which the hydrogen gas regeneration unit 106 is installed.

An opening/closing valve V102 is provided in the pipe L103. The opening/closing valve V102 may be closed while the material 101 is being quenched. The opening/closing valve V102 is released after quenching of the material 101 has ended, and the hydrogen gas which was used for the quenching is thereby supplied to the low-pressure hydrogen gas tank 109 through the pipe L103.

### (Hydrogen gas regeneration unit)

The quenching apparatus illustrated in fig. 1 comprises the hydrogen gas regeneration unit 106 which is installed between the pipe L104 and the pipe L105. The hydrogen gas regeneration unit 106 is a unit which is capable of regenerating hydrogen gas so that it can be reused for quenching, by removing components such as fine particles originating from the material 101, which are contained in the hydrogen gas that has been used for quenching.

Any well-known hydrogen gas regeneration unit may be used as the hydrogen gas regeneration unit 106, to the extent that the effects of the present invention are still achieved. The hydrogen gas regeneration unit 106 is preferably a filter. The filter may have a pore diameter of a size which blocks the passage of solid impurities of a certain size or greater, and/or may have the property of adsorbing impurities.

The quenching apparatus illustrated in fig. 1 may comprise any other additional components. Non-limiting examples of any such additional components that may be cited include: a supply port for supplying hydrogen gas from outside the apparatus to inside the apparatus, a pressure gauge for measuring the pressure of the hydrogen gas at a desired location within the apparatus, a pressure relief valve (safety valve), an exhaust port, and a temperature measurement port for measuring the temperature inside the quenching chamber, etc.

### (Operation of the gas quenching apparatus illustrated in fig. 1)

Quenching of the material by means of the gas quenching apparatus illustrated in fig. 1 is carried out as follows.

The opening/closing valve V101 is released and the opening/closing valve V102 is closed, whereby the high-pressure hydrogen gas stored in the high-pressure hydrogen gas tank 108 is supplied to the second pipe (pipe L102) through the supply pipe (pipe L107). After this, the opening/closing valve V101 can be closed when the pressure of the high-pressure hydrogen gas supplied to the pipe L102 has reached the desired pressure (preferably 2-10 bar, more preferably 5-10 bar), and may be reopened when the pressure of the high-pressure hydrogen gas inside the pipe L102 has fallen below the desired pressure.

The hydrogen gas supplied to the pipe L102 is supplied to the quenching chamber 102. The fan portion 105 is then actuated so that the material 101 placed on the placement stand 103 is air blast cooled, and the material 101 is quenched.

The temperature of the hydrogen gas rises during quenching due to cooling of the material 101. The hydrogen gas which has been raised in temperature is delivered from the quenching chamber 102 to the heat exchanger 104 through the first pipe (pipe L101) and is cooled by means of the heat exchanger 104.

The cooled hydrogen gas passes through the second pipe (pipe L102) and is again supplied to the quenching chamber 102 by means of the fan portion 105.

That is to say, during the time until quenching of the material 101 has ended, the high-pressure hydrogen gas passes through a cycle running from the quenching chamber 102, through the first pipe (pipe L101), the heat exchanger 104, and the second pipe (pipe L102), before returning to the quenching chamber 102. The apparatus illustrated in fig. 1 can therefore reduce the amount of hydrogen gas which is used, by repeatedly recycling the hydrogen gas during quenching.

After quenching of the material 101 has ended, the opening/closing valve V101 is closed and the opening/closing valve V102 is opened, whereby the hydrogen gas which was used for quenching is supplied from the pipe L102 to the low-pressure hydrogen gas tank 109 through the pipe L103.

The hydrogen gas inside the low-pressure hydrogen gas tank 109 is delivered through the pipe L104 to the hydrogen gas regeneration unit 106, where fine particles, etc. which have contaminated the hydrogen gas during quenching are removed, after which the hydrogen gas is supplied through the pipe L105 to the hydrogen gas compressor 107.

The hydrogen gas is pressurized in the hydrogen gas compressor 107. The pressurized hydrogen gas is supplied through the pipe L106 to the high-pressure hydrogen gas tank 108, where the pressurized hydrogen gas is stored. The high-pressure hydrogen gas stored in the high-pressure hydrogen gas tank 108 passes through the supply pipe (pipe L107) comprising the opening/closing valve V101, and can again be supplied to the second pipe (pipe L102) as a result of the opening/closing valve V101 being released.

The apparatus illustrated in fig. 1 can therefore repressurize and store the used gas after the end of quenching and reuse this gas for the subsequent quenching, making it possible to reduce the amount of hydrogen gas which is used.

### <Embodiment 2>

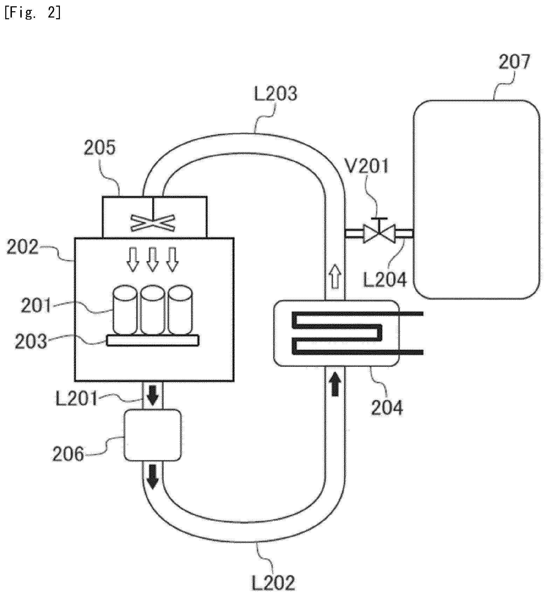

An exemplary configuration of a quenching apparatus according to embodiment 2 is illustrated in fig. 2.

The quenching apparatus illustrated in fig. 2 comprises: a quenching chamber 202 for air blast cooling a material using hydrogen gas; a heat exchanger 204 for cooling the hydrogen gas; a first pipe (pipes L201 and L202 between which a hydrogen gas compressor 206 employing a metal hydride is installed) for supplying the heat exchanger 204 with hydrogen gas discharged from the quenching chamber 202; and a second pipe (pipe L203) for supplying the quenching chamber 202 with hydrogen gas cooled by means of the heat exchanger 204.

The hydrogen gas used for quenching in the quenching apparatus illustrated in fig. 2 is circulated through the apparatus and repeatedly used during quenching. The apparatus can therefore efficiently perform quenching employing hydrogen gas.

The quenching apparatus illustrated in fig. 2 further comprises: the hydrogen gas compressor 206 employing a metal hydride, which is installed between the pipe L201 and the pipe L202 and pressurizes the hydrogen gas supplied from the quenching chamber 202; and a hydrogen gas tank 207 for storing the hydrogen gas supplied through a branch pipe L204 branching from the pipe L203.

By virtue of having these components, the quenching apparatus illustrated in fig. 2 can repressurize and store the hydrogen gas which was used for quenching, and then use this hydrogen gas for subsequent quenching.

### (Hydrogen gas tank 207)

The hydrogen gas tank 207 is capable of storing the hydrogen gas supplied from the pipe L203 through the pipe L204. Furthermore, the hydrogen gas tank 207 is capable of supplying the stored hydrogen gas to the pipe L203 through the pipe L204.

The pipe L204 comprises an opening/closing valve V201. The opening/closing valve V201 may be opened when hydrogen gas is supplied from the pipe L203 to the hydrogen gas tank 207 and when hydrogen gas is discharged from the hydrogen gas tank 207 to the pipe L203, and may otherwise be closed.

### (Other components)

The same components as those of the quenching apparatus illustrated in fig. 1 may be used as components of the quenching apparatus illustrated in fig. 2.

### (Operation of the gas quenching apparatus illustrated in fig. 2)

Quenching of the material by means of the gas quenching apparatus illustrated in fig. 2 is carried out in the same way as quenching of the material by means of the gas quenching apparatus illustrated in fig. 1, which was described above. That is to say, while a material 201 is being quenched, the hydrogen gas passes through a cycle running from the quenching chamber 202, through the pipe L201, the hydrogen gas compressor 206 employing a metal hydride, the pipe L202, the heat exchanger 204, and the pipe L203, before returning to the quenching chamber 202. The gas quenching apparatus illustrated in fig. 2 can therefore reduce the amount of hydrogen gas which is used, by circulating and recycling the hydrogen gas during quenching.

At the start of quenching, the hydrogen gas which is used to air blast cool the material 201 may be introduced from the hydrogen gas tank 207 into the quenching chamber 202 via the pipes L204, L203 and the fan portion 205 by releasing the opening/closing valve V201.

The hydrogen gas inside the quenching chamber 202 which was used to quench the material 201 passes through the pipe L201 and is supplied to the hydrogen gas compressor 206 employing a metal hydride.

Here, the material 201 is preferably heated to a high temperature (e.g., 800-1000° C) in a heating furnace (e.g., a carburizing furnace) before being introduced into the quenching chamber. The hydrogen gas which was used for quenching is therefore preferably hydrogen gas which was heated as a result of contacting the heated material.

Supplying heated hydrogen gas raises the temperature in the hydrogen gas compressor 206 employing a metal hydride, which causes hydrogen adsorbed by the metal hydride to be released in the hydrogen gas compressor 206 employing a metal hydride, so the hydrogen gas discharged from the hydrogen gas compressor 206 through the pipe L202 is pressurized to the desired pressure (preferably 2-10 bar, more preferably 5-10 bar).

The heated hydrogen gas is supplied to the heat exchanger 204 through the pipe L202, and after being cooled in the heat exchanger 204, the hydrogen gas passes through the pipe L203 and is again supplied to the quenching chamber 202 via the fan portion 205. As quenching progresses, the pressure of the hydrogen gas supplied to the heat exchanger 204 therefore increases from above the pressure at the start of quenching, achieving a steady state at the desired pressure (preferably 2-10 bar, more preferably 5-10 bar).

The temperature of the material 201 and the temperature of the hydrogen gas used for quenching the material 201 decrease as quenching progresses and typically fall to a comparable level with room temperature at the end of quenching. The temperature in the hydrogen gas compressor 206 employing a metal hydride also decreases as this happens, which therefore means that hydrogen is adsorbed in the hydrogen gas compressor 206 employing a metal hydride. It should be noted that heat is generated as the metal hydride adsorbs hydrogen, so even if the hydrogen gas is supplied at room temperature, the temperature in the hydrogen gas compressor 206 employing a metal hydride tends to increase to slightly above room temperature while hydrogen is being adsorbed.

At the end of quenching, the pressure of the hydrogen gas falls to 2-5 bar, for example, as a result of the metal hydride adsorbing hydrogen gas.

The opening/closing valve V201 is opened when the pressure of the hydrogen gas inside the quenching chamber 202 has risen to a predetermined pressure (preferably 2-10 bar, more preferably 5-10 bar), or to a higher pressure than this, whereby hydrogen gas is supplied to the hydrogen gas tank 207 and the pressure of the hydrogen gas inside the quenching chamber 202 is also maintained at the predetermined pressure. The hydrogen gas supplied to the hydrogen gas tank 207 is sealed and stored inside the hydrogen gas tank 207 by closing the opening/closing valve V201.

The material 201 is removed from the quenching chamber 202 after quenching has ended. Another material to be subsequently quenched is then placed inside the quenching chamber 202. After this other material has been set in place, the opening/closing valve V201 is opened and the hydrogen gas stored in the hydrogen gas tank 207 is introduced into the pipe L203 so that this other material can be quenched.

The apparatus illustrated in fig. 2 can therefore reduce the amount of hydrogen gas which is used, by recycling the hydrogen gas which was used for quenching to the subsequent quenching.

Furthermore, the quenching apparatus illustrated in fig. 2 uses the hydrogen gas compressor 206 employing a metal hydride as the hydrogen gas compressor. This quenching apparatus adsorbs hydrogen to and releases hydrogen from the metal hydride by utilizing the change in heat of material associated with quenching. Accordingly, the quenching apparatus illustrated in fig. 2 is capable of pressurizing hydrogen gas efficiently without the use of an external cold energy source.

### <Embodiment 3>

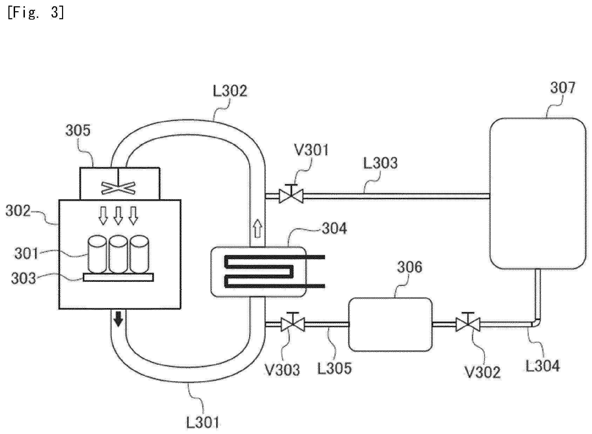

An exemplary configuration of a quenching apparatus according to embodiment 3 is illustrated in fig. 3.

The quenching apparatus illustrated in fig. 3 comprises: a quenching chamber 302 for air blast cooling a material 301 using hydrogen gas; a heat exchanger 304 for cooling the hydrogen gas; a first pipe (pipe L301) for supplying the heat exchanger 304 with hydrogen gas discharged from the quenching chamber 302; and a second pipe (pipe L302) for supplying the quenching chamber 302 with hydrogen gas cooled by means of the heat exchanger 304.

The hydrogen gas used for quenching in the quenching apparatus illustrated in fig. 3 is circulated through the apparatus and repeatedly used during quenching. The apparatus can therefore efficiently perform quenching employing hydrogen gas.

The quenching apparatus illustrated in fig. 3 further comprises: a hydrogen gas compressor 306 employing a metal hydride, for pressurizing hydrogen gas supplied through a branch pipe (pipe L305) branching from the pipe L301; a hydrogen gas tank 307 for storing the hydrogen gas pressurized by the hydrogen gas compressor 306; and a supply pipe for supplying the hydrogen gas inside the hydrogen gas tank to the second pipe.

The hydrogen gas compressor 306 and the hydrogen gas tank 307 are connected by means of a connecting pipe (pipe L304). An opening/closing valve V303 is provided in the pipe L305, an opening/closing valve V302 is provided in the pipe L304, and an opening/closing valve V301 is provided in the pipe L303.

By virtue of having these components, the quenching apparatus illustrated in fig. 3 can repressurize and store the hydrogen gas which was used for quenching, and then use this hydrogen gas for subsequent quenching.

### (Hydrogen gas tank 307)

The hydrogen gas tank 307 is supplied, via the pipe L304, with hydrogen gas pressurized by means of the hydrogen gas compressor 306 employing a metal hydride, and is capable of storing the pressurized hydrogen gas. The hydrogen gas stored inside the hydrogen gas tank 307 can be sealed inside the hydrogen gas tank 307 by closing the opening/closing valve V302 and the opening/closing valve V301.

### (Other components)

The same components as those of the quenching apparatuses illustrated in fig. 1 and 2, which were described above, may be used as components of the quenching apparatus illustrated in fig. 3.

### (Operation of the gas quenching apparatus illustrated in fig. 3)

Quenching of the material by means of the gas quenching apparatus illustrated in fig. 3 is carried out in the same way as quenching of the material by means of the gas quenching apparatus illustrated in fig. 1 or 2, which was described above. That is to say, while the material 301 is being quenched, the high-pressure hydrogen gas passes through a cycle running from the quenching chamber 302, through the pipe L301, the heat exchanger 304, and the pipe L302, before returning to the quenching chamber 302. The apparatus illustrated in fig. 3 can therefore reduce the amount of hydrogen gas which is used, by circulating and recycling the hydrogen gas during quenching.

At the start of quenching, the hydrogen gas which is used to air blast cool the material 301 may be introduced from the hydrogen gas tank 307 into the quenching chamber 302 via the pipes L303, L302 and the fan portion 305 by releasing the opening/closing valve V301 and closing the opening/closing valve V302 and the opening/closing valve V303. After the hydrogen gas has been introduced, the pressure rises to a predetermined pressure, and the opening/closing valve V301 is then closed.

After quenching of the material 301 has ended, the opening/closing valve V303 is released, whereby the hydrogen gas which was used for quenching is circulated to the hydrogen gas compressor 306 employing a metal hydride. Here, hydrogen in the hydrogen gas is adsorbed by the metal hydride as a result of the metal hydride being kept at no greater than room temperature by using an external cold energy source.

The hydrogen adsorbed by the metal hydride is released from the metal hydride by heating the metal hydride using an external heat source. At this point, the opening/closing valve V303 and the opening/closing valve V301 are closed and the opening/closing valve V302 is released, whereby the pressure of the hydrogen gas in the hydrogen gas tank 307 can be raised to the desired pressure (preferably 2-10 bar, more preferably 5-10 bar).

The material 301 is removed from the quenching chamber 302 after quenching has ended. Another material is then placed inside the quenching chamber 302, enabling the quenching described above to be repeated for this other material.

The apparatus illustrated in fig. 3 can therefore reduce the amount of hydrogen gas which is used, by recycling the hydrogen gas which was used for quenching to the subsequent quenching.

Furthermore, the quenching apparatus illustrated in fig. 3 uses the hydrogen gas compressor 306 employing a metal hydride as the hydrogen gas compressor. This quenching apparatus adsorbs hydrogen to and releases hydrogen from the metal hydride by utilizing an external cold energy source and heat source. Accordingly, the quenching apparatus illustrated in fig. 3 is capable of efficiently recycling hydrogen gas.

### <Gas quenching method, and method for producing a quenched component or a product comprising such a component>

One embodiment relates to a method for producing a quenched material, the method comprising quenching a material by means of hydrogen gas in the quenching apparatus described above, and a method for producing a product comprising the quenched material. There is no limitation as to the product provided that it is a product that can be produced by means of the production method, and non-limiting examples of products that may be cited include a gear, a shaft, and a bearing.

A non-limiting list of exemplary embodiments and combinations of exemplary embodiments of the present disclosure is disclosed below.
[1] Quenching apparatus comprising: a quenching chamber for air blast cooling a material using hydrogen gas;
   a heat exchanger for cooling the hydrogen gas;
   a first pipe for supplying the heat exchanger with hydrogen gas discharged from the quenching chamber; and
   a second pipe for supplying the quenching chamber with hydrogen gas cooled by means of the heat exchanger.
[2] Quenching apparatus according to [1], further comprising: a branch pipe branching from the second pipe;
   a low-pressure hydrogen gas tank for storing hydrogen gas supplied through the branch pipe;
   a hydrogen gas compressor for pressurizing hydrogen gas supplied from the low-pressure hydrogen gas tank;
   a high-pressure hydrogen gas tank for storing hydrogen gas pressurized by means of the hydrogen gas compressor; and
   a supply pipe for supplying the hydrogen gas inside the high-pressure hydrogen gas tank to the second pipe.
[3] Quenching apparatus according to [2], wherein a hydrogen gas regeneration unit for removing impurities in the hydrogen gas is installed partway along a pipe connecting the low-pressure hydrogen gas tank and the hydrogen gas compressor.
[4] Quenching apparatus according to [2], wherein the hydrogen gas compressor employs a metal hydride.
[5] Quenching apparatus according to [1], further comprising: a hydrogen gas compressor which is installed partway along the first pipe and pressurizes the hydrogen gas supplied from the quenching chamber; and
   a hydrogen gas tank which communicates with the second pipe through a branch pipe branching from the second pipe,
      wherein
   the hydrogen gas compressor employs a metal hydride.
[6] Quenching apparatus according to [1], further comprising: a hydrogen gas compressor for pressurizing the hydrogen gas supplied through a branch pipe branching from the first pipe;
   a hydrogen gas tank for storing hydrogen gas pressurized by the hydrogen gas compressor; and
   a supply pipe for supplying the hydrogen gas inside the hydrogen gas tank to the second pipe,
      wherein
   the hydrogen gas compressor employs a metal hydride.
[7] Method for producing a quenched material, the method comprising quenching a material by means of hydrogen gas in a quenching apparatus according to any of [1] to [6].
[8] Method for producing product comprising a quenched material, the method comprising quenching a material by means of hydrogen gas in a quenching apparatus according to any of [1] to [6].

Production method according to [8], wherein the product is a gear, a shaft, or a bearing.

### [Examples]

The present invention is illustrated by the following examples, but these examples are not intended to limit the present invention. It should be noted that commercially available reagents and equipment, etc., mentioned in the examples were used in accordance with the manufacturer's instructions or standard methods, unless otherwise specified.

### [Example 1]

Relationship between the distance from a material surface and Vickers hardness of quenched materials

SCr420H ferrous material was quenched by means of air blast cooling using oil, or 100% hydrogen gas or 100% nitrogen gas pressurized to 7-8 bar as the coolant.

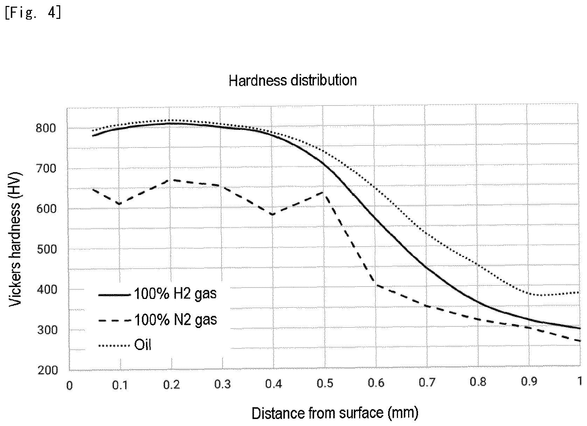

Results of measuring the relationship between the distance from the surface and the Vickers hardness of the quenched ferrous materials are shown in fig. 4.

As shown in fig. 4, the Vickers hardness of the surface of the ferrous material could be effectively improved by means of quenching using hydrogen gas as the coolant, in the same way as for quenching using oil as the coolant. When nitrogen gas was used as the coolant, on the other hand, it was not possible to achieve a satisfactory Vickers hardness of the surface of the ferrous material as compared to when hydrogen gas was used as the coolant.

These results show that the quenching apparatus according to the present invention is also capable of performing efficient quenching at a relatively low hydrogen gas pressure. These results also show that quenching performed by means the quenching apparatus according to the present invention is more efficient than quenching using a quenching apparatus employing another gas as the coolant, and compares favourably in terms of efficiency with quenching using oil as the coolant.

The quenching apparatus according to the present invention is therefore capable of performing quenching efficiently. Furthermore, the quenching apparatus according to the present invention uses recycled hydrogen gas and is therefore capable of performing efficient quenching using hydrogen gas at a low cost.
101 Material
102 Quenching chamber
103 Placement stand
104 Heat exchanger
105 Fan portion
106 Hydrogen gas regeneration unit
107 Hydrogen gas compressor
108 High-pressure hydrogen gas tank
109 Low-pressure hydrogen gas tank
L101-L107 Pipe
V101, V102 Opening/closing valve
201 Material
202 Quenching chamber
203 Placement stand
204 Heat exchanger
205 Fan portion
206 Hydrogen gas compressor employing metal hydride
270 Hydrogen gas tank
L201-L204 Pipe
V201 Opening/closing valve
301 Material
302 Quenching chamber
303 Placement stand
304 Heat exchanger
305 Fan portion
306 Hydrogen gas compressor employing metal hydride
307 Hydrogen gas tank
L301-L305 Pipe
V301-V303 Opening/closing valve

## Claims

1. Quenching apparatus comprising: a quenching chamber for air blast cooling a material using hydrogen gas;
a heat exchanger for cooling the hydrogen gas;
a first pipe for supplying the heat exchanger with hydrogen gas discharged from the quenching chamber; and
a second pipe for supplying the quenching chamber with hydrogen gas cooled by means of the heat exchanger.

2. Quenching apparatus according to Claim 1, further comprising: a branch pipe branching from the second pipe;
a low-pressure hydrogen gas tank for storing hydrogen gas supplied through the branch pipe;
a hydrogen gas compressor for pressurizing hydrogen gas supplied from the low-pressure hydrogen gas tank;
a high-pressure hydrogen gas tank for storing hydrogen gas pressurized by means of the hydrogen gas compressor; and
a supply pipe for supplying the hydrogen gas inside the high-pressure hydrogen gas tank to the second pipe.

3. Quenching apparatus according to Claim 2, wherein a hydrogen gas regeneration unit for removing impurities in the hydrogen gas is installed partway along a pipe connecting the low-pressure hydrogen gas tank and the hydrogen gas compressor.

4. Quenching apparatus according to Claim 2, wherein the hydrogen gas compressor employs a metal hydride.

5. Quenching apparatus according to Claim 1, further comprising: a hydrogen gas compressor which is installed partway along the first pipe and pressurizes the hydrogen gas supplied from the quenching chamber; and
a hydrogen gas tank which communicates with the second pipe through a branch pipe branching from the second pipe,
wherein
the hydrogen gas compressor employs a metal hydride.

6. Quenching apparatus according to Claim 1, further comprising: a hydrogen gas compressor for pressurizing the hydrogen gas supplied through a branch pipe branching from the first pipe;
a hydrogen gas tank for storing hydrogen gas pressurized by the hydrogen gas compressor; and
a supply pipe for supplying the hydrogen gas inside the hydrogen gas tank to the second pipe,
wherein
the hydrogen gas compressor employs a metal hydride.

7. Method for producing a quenched material, the method comprising quenching a material by means of hydrogen gas in a quenching apparatus according to any one of Claims 1 to 6.

8. Method for producing a product comprising a quenched material, the method comprising quenching a material by means of hydrogen gas in a quenching apparatus according to any one of Claims 1 to 6.

9. Production method according to Claim 8, wherein the product is a gear, a shaft, or a bearing.
